# FASCICULE DE BREVET EUROPEEN

(11) **EP 1 921 342 B1**
(45) Date de publication et mention de la délivrance du brevet: **09.06.2010**
(21) Numéro de dépôt: 07291311.4
(22) Date de dépôt: 31.10.2007
(51) Int. Cl.: F16F 13/10, F16F 13/26, F16F 9/58, B64C 25/60

(54) **Organe télescopique à butée interne effaçable**
Teleskoporgan mit versenkbarem Innenanschlag
Telescoping element with removable internal stop

(30) Priorité: 13.11.2006 FR 0609903
(43) Date de publication de la demande: 14.05.2008
(73) Titulaire: MESSIER-DOWTY S.A., 78140 Velizy Villacoublay (FR)
(72) Inventeur: Lahargou, André, 91430 Vauhallan (FR); Brune, Marc, 77340 Pontault Combault (FR)
(74) Mandataire: Parzy, Benjamin Alain

(56) Documents cités:
- WO-A2-2004/040164
- FR-A1- 2 608 242

## Description

### ARRIERE-PLAN DE L'INVENTION

On connaît de nombreux organes télescopiques dont la position rentrée est définie par une butée interne, par exemple des vérins, ou des amortisseurs d'atterrisseur pour aéronef.

Dans le cas plus spécifique des amortisseurs, il y a souvent besoin de définir une butée rentrée car ces amortisseurs servent également à rétracter l'atterrisseur, la butée interne permettant de définir la position rétractée de l'atterrisseur.

Cependant, la course utile définie par cette butée peut être inférieure à la course qui serait nécessaire pour absorber l'énergie d'atterrissage en cas d'atterrissage sévère.

On connaît du document FR-A-2608242 des organes télescopiques à butée effaçable. En particulier, on connaît l'utilisation de pièce de butée disposée dans le fond de l'amortisseur et sur laquelle la tige de l'amortisseur vient appuyer lorsqu'elle arrive dans la position de butée. L'appui de la tige au-delà d'un seuil d'effort prédéterminé provoque le flambage de la pièce de butée, ce qui permet une surcourse de la tige au-delà de la position rétractée.

Cependant, ces pièces de butée ont des formes complexes pour permettre le départ en flambage, et le seuil d'effort de flambage est, du fait des dispersions d'usinage, très difficile à respecter.

### OBJET DE L'INVENTION

L'invention a pour objet un organe télescopique à butée effaçable d'un type simple.

### BREVE DESCRIPTION DE L'INVENTION

En vue de la réalisation de ce but, on propose un organe télescopique comportant un cylindre dans lequel une tige est montée pour coulisser télescopiquement, l'organe télescopique comportant des moyens de butée interne effaçable sous un effort prédéterminé lorsque la tige vient en butée rentrée dans le cylindre. Selon l'invention, les moyens de butée interne comportent une pièce de butée s'étendant dans un creux débouchant de la tige pour saillir de celle-ci, la pièce de butée étant maintenue sur la tige par l'intermédiaire d'une goupille.

Ainsi, lorsque la tige arrive en butée rentrée avec un effort dépassant le seuil de cisaillement de la goupille, celle-ci cède et la pièce de butée s'enfonce dans le creux de la tige, ce qui libère une surcourse d'enfoncement de la tige. L'effort provoquant le cisaillement de la goupille peut être parfaitement contrôlé, de sorte que cet effort est bien mieux assuré que dans le cas des pièces de butée.

### BREVE DESCRIPTION DES DESSINS

Ces aspects de l'invention et d'autres aspects seront plus amplement compris à la lumière de l'unique figure des dessins annexés qui est une vue en coupe d'un amortisseur selon un mode particulier de réalisation de l'invention incorporant la fonction extension/rétraction, illustré en position détendue.

### DESCRIPTION DETAILLEE DE L'INVENTION

L'invention est illustrée ici en relation avec un amortisseur utilisé pour un atterrisseur principal d'hélicoptère du type comportant un balancier directement articulé sur le fuselage de l'hélicoptère, l'amortisseur représenté ici étant destiné à être monté articulé entre le balancier et un point d'articulation sur le fuselage.

L'amortisseur comporte ici un cylindre principal 1 dans lequel une tige 2 est montée à coulissement télescopique. A cet effet, la tige 2 porte un piston étanche 3 qui coulisse dans le cylindre principal 1 et qui définit dans celui-ci une chambre annulaire 4 et une chambre pleine 5 remplie de fluide hydraulique, formant une réserve de fluide hydraulique. L'extrémité du cylindre principal 1 et de la tige 2 portent des chapes 6,7 pour la liaison articulée de l'amortisseur sur le fuselage d'une part et sur le balancier de l'atterrisseur d'autre part.

L'amortisseur comporte un premier cylindre auxiliaire 10 monté rigidement sur le cylindre principal, par exemple ici par vissage avec interposition d'un joint d'étanchéité, à proximité de la chape d'extrémité 6 du cylindre principal 1. Le premier cylindre auxiliaire 10 d'étend selon une direction sensiblement perpendiculaire à un axe longitudinal du cylindre principal 1. Un premier piston 11 est monté à coulissement étanche dans le premier cylindre auxiliaire 10 pour séparer l'intérieur de celui-ci en une première chambre pneumatique 12 remplie de gaz sous pression et une première chambre fluide 13 en communication avec la chambre pleine 5 du cylindre principal 1 via un premier organe de laminage 14.

L'amortisseur comporte un deuxième cylindre auxiliaire 20 monté rigidement sur le cylindre principal, par exemple ici par vissage avec interposition d'un joint d'étanchéité, à proximité de la chape d'extrémité 6 du cylindre principal 1. Le deuxième cylindre auxiliaire 20 s'étend de l'autre côté du cylindre principal 1 selon sensiblement la même direction que celle du premier cylindre auxiliaire 10. Un deuxième piston 21 est monté à coulissement étanche dans le deuxième cylindre auxiliaire 20 pour séparer l'intérieur de celui-ci en une deuxième chambre pneumatique 22 remplie de gaz sous pression et une deuxième chambre fluide 23 en communication avec la chambre pleine 5 du cylindre principal 1 via un deuxième organe de laminage 24.

Les organes de laminage 14,24 sont bien connus de l'homme du métier et ne feront pas ici l'objet d'une description détaillée.

Ici, la connexion fluidique entre la chambre pleine 5 et les cylindres auxiliaires 10,20 est réduite à sa plus simple expression, puisque les cylindres auxiliaires sont directement en communication avec la chambre plein 5 via les organes de laminage 14,24 disposés en entrée des cylindres auxiliaires.

La première chambre pneumatique 12 est gonflée à une première pression, tandis que la deuxième chambre pneumatique 22 est gonflée à une deuxième pression qui est supérieure à la première pression. Typiquement, la première chambre pneumatique 12 est gonflée à 20 bars, tandis que la seconde chambre pneumatique 22 est gonflée à 80 bars.

Le fonctionnement de l'amortisseur lors d'un atterrissage est le suivant. Sous l'action du balancier qui tend à enfoncer l'amortisseur, la tige 2 est enfoncée dans le cylindre principal 1, ce qui force le fluide hydraulique contenu dans la chambre pleine 5 à passer au travers des premier et second organes de laminage 14, 24 pour remplir les première et seconde chambres fluide hydrauliques 13,23, et ainsi repousser les premier et second pistons 11,21 pour compresser le gaz contenu dans le première et seconde chambres pneumatiques 12,22.

La chambre annulaire 4 est en temps normal reliée via une première vanne commandée 30 à une réserve de fluide hydraulique ou bâche de l'aéronef non représentée et dont la pression est typiquement de l'ordre de 5 bars, de sorte que la chambre annulaire 4 est remplie progressivement de fluide hydraulique lors de l'enfoncement de la tige 2, évitant ainsi toute cavitation.

Lorsque l'hélicoptère décolle, le gaz sous pression dans les chambres pneumatiques 12,22 repousse le fluide hydraulique contenu dans les chambres fluide hydrauliques 13,23 au travers des organes de laminage 14,24 vers la chambre pleine 5, ce qui repousse la tige 2 vers sa position.détendue. Le fluide hydraulique contenu dans la chambre annulaire 4 est refoulé vers la réserve de fluide hydraulique sous pression de l'aéronef.

Les chambres pneumatiques étant ainsi rejetées sur le côté du cylindre principal, l'amortisseur a ainsi une longueur L détendue particulièrement compacte.

Selon un aspect particulier de l'invention, l'amortisseur est prévu pour permettre une rétraction du balancier, en vue de limiter la traînée aérodynamique de ce dernier en vol. A cet effet, on organise un raccourcissement commandé de l'amortisseur de la façon suivante. Du fluide hydraulique sous haute pression (typiquement 206 bars) est injecté dans la chambre annulaire 4 au moyen de la première vanne commandée 30, ce qui a tendance à faire rentrer la tige 2 dans le cylindre principal 1. Simultanément, une deuxième vanne commandée 31 permet de mettre en communication la chambre pleine 5 avec une bonbonne 40, de sorte que le fluide hydraulique contenu dans la chambre pleine 5 puisse être évacué vers ladite bonbonne 40. Le fluide hydraulique reçu dans la bonbonne 40 repousse un piston 41 monté coulissant dans la bonbonne 40, qui lui-même repousse le fluide hydraulique présent sous le piston 41 vers la réserve de l'aéronef. On notera ainsi que le fluide hydraulique issu de la chambre pleine 5 ne se mélange pas avec le fluide hydraulique de l'aéronef. Lorsque la tige 2 arrive en butée dans le fond du cylindre principal 1, on ferme alors la première vanne commandée 30 de sorte que le fluide hydraulique présent dans la chambre annulaire 4 soit emprisonné et empêche ainsi la détente de l'amortisseur.

On remarquera que lors de cette rétraction, les chambres pneumatiques 12,22 ne sont pas compressées puisque leur pression de gonflage est plus importante que la pression de la bonbonne 40 (sensiblement à la pression de la bâche, soit 5 bars), de sorte que le fluide hydraulique se dirige préférentiellement vers la bonbonne 40.

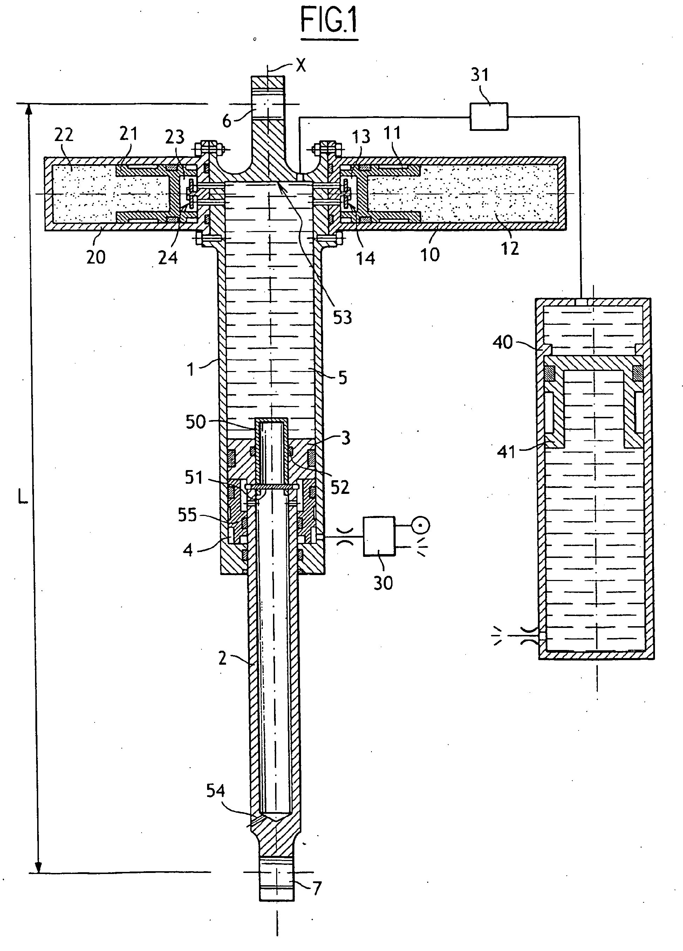

Pour faire revenir l'amortisseur en position détendue, il suffit d'ouvrir la première vanne commandée 30 pour mettre en communication la chambre annulaire 4 avec la réserve de l'aéronef, et dans le même temps, d'ouvrir la deuxième vanne commandée 31, si elle a été fermée. Il règne ainsi sensiblement la même pression de part et d'autre du piston 4, et grâce au jeu des différences de section de la chambre annulaire 4 et de la chambre principale 5, la tige est entraînée vers l'extérieur et l'amortisseur se détend, jusqu'à revenir à la position illustrée à la figure 1.

Selon l'invention, l'amortisseur est capable d'une surcourse en cas d'atterrissage particulièrement sévère. A cet effet, la tige 2 comporte un orifice creux débouchant du côté du piston 3 et reçoit une pièce de butée 50 dans le creux de la tige 2 pour saillir de la tige 2. La pièce de butée 50 est maintenue sur la tige par une goupille 51. La pièce de butée 50 comporte un fond, et un joint d'étanchéité 52 est disposé entre la tige 2 et la pièce de butée 50 ce qui permet d'isoler le creux de la tige vis-à-vis de la chambre pleine 5.

Lorsque l'amortisseur est utilisé pour rétracter l'atterrisseur, la pièce de butée 50 vient en butée contre le fond 53 du cylindre principal 1 et définit ainsi la position rentrée de l'amortisseur. Lorsque l'amortisseur est utilisé pour amortir les chocs à l'atterrissage, la pièce de butée 50 ne vient normalement pas accoster le fond 53 du cylindre principal 1. Cependant, dans certains cas d'atterrissage sévère, il se peut que non seulement la pièce de butée 50 vienne toucher le fond 53, mais, que l'énergie à absorber reste telle que ce contact ne suffit pas à arrêter l'enfoncement de l'amortisseur. Selon l'invention, la goupille 51 est alors prévue pour céder au-delà d'un seuil d'effort prédéterminé, afin d'une part d'absorber une partie du surplus d'énergie d'atterrissage par la rupture de la goupille 51, et afin d'autre part d'autoriser une surcourse de la tige 2 dans le cylindre principal 1, permettant une surcompression des chambres pneumatiques 12,22, ce qui contribue également à absorber une autre partie du surplus d'énergie d'atterrissage.

La rupture en cisaillement de la goupille propulse la pièce de butée 50 vers le fond du creux de la tige 2, de sorte que la pièce de butée 50 ne coopère plus avec le joint d'étanchéité 52. Le fluide hydraulique contenu dans la chambre plein 5 peut alors s'écouler (lentement) entre l'organe de butée 52 et la paroi du creux de la tige 2 pour se vider par l'orifice d'évacuation 54 disposé en bas de tige et ainsi contribuer à diminuer la pression importante régnant dans l'amortisseur du fait de la surcompression.

On remarquera qu'en temps normal, l'orifice d'évacuation 54 risque de mettre en communication la chambre annulaire 4 avec l'air extérieur. Pour éviter que cet air ne se mélange au fluide hydraulique de l'aéronef, un piston flottant 55 est disposé à étanchéité entre le cylindre 1 et la tige 2 de sorte que l'arrivée de fluide hydraulique par la première vanne commandée 30 se fasse sous le piston flottant 5, tandis que l'air provenant de l'orifice d'évacuation 54 ne peut que remplir l'espace s'étendant entre le piston flottant 55 et le piston 3 de la tige 2. Il n'y a donc aucun risque de pollution du fluide hydraulique de l'aéronef par l'air extérieur.

L'invention n'est pas limitée à ce qui vient d'être décrit, mais bien au contraire englobe toute variante entrant dans le cadre défini par les revendications.

En particulier, bien que l'invention est illustrée ici en relation avec un amortisseur utilisé pour un atterrisseur principal d'hélicoptère du type comportant un balancier directement articulé sur le fuselage de l'hélicoptère, l'amortisseur représenté ici étant monté articulé entre le balancier et un point d'articulation sur le fuselage, l'invention n'est pas limitée à ce type d'atterrisseur; elle peut par exemple parfaitement s'appliquer à un atterrisseur de type direct pour lequel le caisson forme le cylindre principal 1 et la tige 2 porte directement la ou les roues.

Bien que l'on ait illustré les cylindres auxiliaires directement fixés sur le cylindre principal de sorte que l'organe de laminage soient disposés en entrée des cylindres auxiliaires, les cylindres auxiliaires pourront être disposés ailleurs. Par exemple, on pourra les fixer sur lé côté du cylindre principal, parallèlement à celui-ci, les cylindres auxiliaires étant reliés au cylindre principal par une connexion fluidique, par exemple une tuyauterie rigide. On pourra également fixer les cylindres auxiliaires dans la soute de l'aéronef, ce qui oblige à prévoir des interfaces supplémentaires sur l'aéronef. Dans ce cas, il faudra prévoir une connexion fluidique avec un tronçon flexible ou permettant d'accommoder les mouvements de l'amortisseur par rapport à la soute. Dans touts les cas, on disposera de préférence les organes de laminage en entrée des connexions fluidiques, de sorte que celles-ci et les cylindres auxiliaires ne subissent pas les fortes pressions régnant dans la chambre pleine 5 lors de l'enfoncement de l'amortisseur.

Bien que l'on ait illustré ici un amortisseur à deux chambres pneumatiques, on pourra bien sûr appliquer l'invention à un amortisseur à une seule chambre pneumatique, ou au contraire, à plus de deux chambres pneumatiques.

Enfin, bien que le montage particulier de l'organe de butée 50 dans le creux de la tige 2 en étant retenu par une goupille soit ici illustré en application à un amortisseur, cette disposition s'applique plus généralement à tout type de vérin télescopique.

## Revendications

1. Organe télescopique comportant un cylindre (1) dans lequel une tige (2) comportant un piston (3) est montée pour coulisser télescopiquement, l'organe télescopique comportant des moyens de butée interne effaçables sous un effort prédéterminé lorsque la tige vient en butée rentrée dans le cylindre, **caractérisé en ce que** les moyens de butée interne comportent une pièce de butée (50) s'étendant dans un creux débouchant de la tige (2) pour saillir de celle-ci, la pièce de butée étant maintenue sur la tige par l'intermédiaire d'une goupille (51).

2. Organe télescopique selon la revendication 1, dans lequel la pièce de butée comporte un fond, un joint d'étanchéité (52) étant disposé entre la tige et la pièce de butée pour isoler le creux de la tige (2) d'une chambre pleine (5) de l'organe télescopique s'étendant au-delà du piston (3).

3. Organe selon la revendication 2, dans lequel la tige (1) comporte des moyens (54) de mise en communication du creux de la tige avec l'air extérieur.

4. Organe télescopique selon la revendication 2, dans lequel un piston flottant (55) est disposé dans une chambre annulaire (4) de l'organe télescopique s'étendant entre la tige (2) et le cylindre (1) pour séparer une portion de la chambre annulaire en communication avec un circuit de fluide hydraulique d'une portion de la chambre annulaire s'étendant entre le piston flottant (55) et le piston (3) de la tige (2).

## Claims

1. A telescopic member comprising a cylinder (1) in which a rod (2) carrying a piston (3) is mounted to slide telescopically, the telescopic member including internal abutment means that are overridable over a predetermined force when the rod comes into abutment inside the cylinder in the shortening direction, the member being **characterized in that** the internal abutment means comprise an abutment piece (50) extending in an open bore within the rod (2) and projecting therefrom, the abutment piece being held to the rod via a pin (51).

2. A telescopic member according to claim 1, in which the abutment piece comprises an end wall, a sealing gasket (52) being disposed between the rod and the abutment piece to isolate the bore of the rod (2) from an uninterrupted chamber (5) of the telescopic member extending beyond the piston (3).

3. A member according to claim 2, in which the rod (1) includes means (54) for putting the bore in the rod into communication with outside air.

4. A telescopic member according to claim 2, in which a floating piston (55) is disposed in an annular chamber (4) of the telescopic member extending between the rod (2) and the cylinder (1) to separate a portion of the annular chamber that is in communication with a hydraulic fluid circuit from a portion of the annular chamber that extends between the floating piston (55) and the piston (3) of the rod (2).

## Patentansprüche

1. Teleskopelement, umfassend einen Zylinder (1), in dem eine Stange (2), die einen Kolben (3) umfasst, teleskopisch verschiebbar gelagert ist, wobei das Teleskopelement innere Anschlagmittel umfasst, die unter einer vorgegebenen Kraft beseitigbar sind, wenn die Stange nach dem Einfahren in den Zylinder zum Anschlag kommt, **dadurch gekennzeichnet, dass** die inneren Anschlagmittel ein Anschlagteil (50) umfassen, das sich so in einen sich aus der Stange (2) heraus öffnenden Hohlraum erstreckt, dass es aus derselben vorsteht, wobei das Anschlagteil durch einen Stift (51) an der Stange gehalten wird.

2. Teleskopelement nach Anspruch 1, wobei das Anschlagteil einen Boden umfasst, wobei eine Dichtung (52) zwischen der Stange und dem Anschlagteil angeordnet ist, um den Hohlraum der Stange (2) von einer gefüllten Kammer (5) des Teleskopelements zu trennen, die sich jenseits des Kolbens (3) erstreckt.

3. Element nach Anspruch 2, wobei die Stange (1) Mittel (54) umfasst, um eine Verbindung zwischen dem Hohlraum der Stange und der Außenluft herzustellen.

4. Teleskopelement nach Anspruch 2, wobei ein Schwimmkolben (55) in einer Ringkammer (4) des Teleskopelements angeordnet ist, die sich zwischen der Stange (2) und dem Zylinder (1) erstreckt, um einen Abschnitt der Ringkammer, der mit einem Hydraulikfluidkreis in Verbindung steht, von einem Abschnitt der Ringkammer zu trennen, der sich zwischen dem Schwimmkolben (55) und dem Kolben (3) der Stange (2) erstreckt.
